# EUROPEAN PATENT SPECIFICATION

(11) **EP 0 420 200 B1**
(45) Date of publication and mention of the grant of the patent: **01.05.1996**
(21) Application number: 90118486.1
(22) Date of filing: 26.09.1990
(51) Int. Cl.: B60T 13/52

(54) **A booster**
Ein Kraftverstärker
Un amplificateur de force

(30) Priority: 27.09.1989 JP 251609/89
(43) Date of publication of application: 03.04.1991
(73) Proprietor: AISIN SEIKI KABUSHIKI KAISHA, Kariya City Aichi Pref. (JP)
(72) Inventor: Furuta, Yoichi, Chiryu City, Aichi-Pref. (JP); Shirai, Akira, Toyoake City, Aichi-Pref. (JP); Kawasumi, Satoshi, Takahama City, Aichi-Pref. (JP)
(74) Representative: Tiedtke, Harro, Dipl.-Ing.

(56) References cited:
- EP-A- 0 151 028
- DE-A- 3 605 295
- FR-A- 1 527 482
- GB-A- 1 139 053
- GB-A- 2 079 881

## Description

The present invention relates to a booster and in particular to a booster according to the preamble of claim 1, to be connected to a brake master cylinder, for example.

Japanese Utility Model Laid-Open JP-U-60-30871 which was published without examination in 1985 discloses a booster having a housing in which a constant-pressure chamber and a variable-pressure chamber are defined by a power piston, an input rod to which an input force is applied from a brake pedal and which is operatively connected to one end of the power piston, a valve means provided in the power piston and operatively connected to the input piston which opens upon receipt of the input force therefrom in such a manner that the differential presssure between the chambers moves the power piston and an output rod operatively connected to the other end of the power piston for actuating a master cylinder.

In the conventional booster, when a driver depresses a brake pedal, an input force F1 is applied to the input rod. The force is increased due to the well-known function of the booster and resulting force is transmitted, as an output force F2 of the booster, to the master cylinder for the actuation thereof via the output rod.

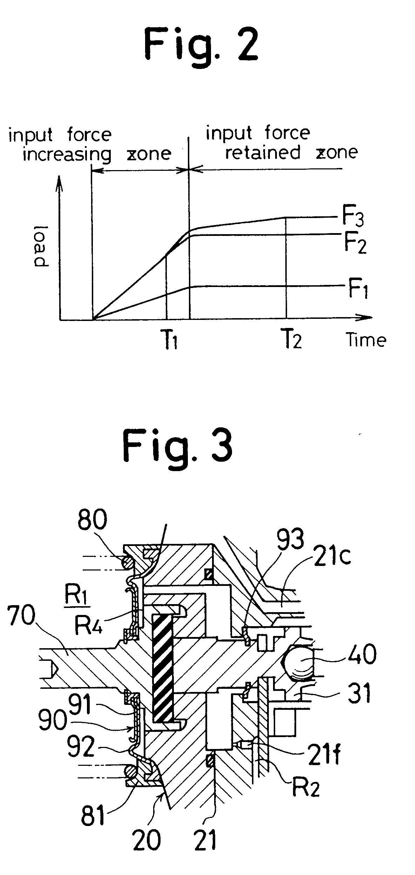

However, in the conventional booster, since the increasing degree of the output force F2 is greater than that of the input force F1 (cf. Fig. 2), if the Input force F1 is retained at a value, the output force F2 is also retained at a value corresponding to the foregoing value. Thus, sometimes, insufficient braking force is felt by the driver which is due to the decreasing of µ of a brake-pad.

According to the document EP-A-0 151 028 there is disclosed a booster according to the preamble of claim 1. An auxiliary chamber of this generic booster is connected to a source of vacuum pressure through passages, thus, any differential pressure does not generate between the auxiliary chamber and the constant pressure chamber and the booster acts as a single diaphragm type booster.

From the document GB-A-2 079 881 there is known a power booster in which, in order to reduce the forces transmitted by a reaction device, there is provided a first booster piston directly connected to a booster's output member and the second booster piston of smaller size acting thoroughly on the reaction device, wherein both booster pistons are controlled by a control valve carried by the second booster piston.

According to the futher document GB-A-1 139 053 there is disclosed a booster comprising two constant pressure chambers and two variable pressure chambers, wherein the two constant pressure chambers communicate with each other through tubes and a connector conduit.

The object of the invention is to provide a booster in which an output force can be increased while an input force is retained at a value.

This object is achieved by means of the combination of the features of claim 1. Preferable embodiments of the invention are defined in the subclaims.

These and other objects, features and advantages of the present invention will become fully apparent on reading the following detailed description with reference to the accompanying drawings, wherein like members bear like reference numerals, and wherein:
FIG.1 is a cross-sectional view of a booster according to an embodiment of the present invention;
FIG.2 is a graph showing the characteristics of input and output with respect to time; and
FIG.3 is a cross-sectional view of a major portion of a booster according to another embodiment of the present invention.

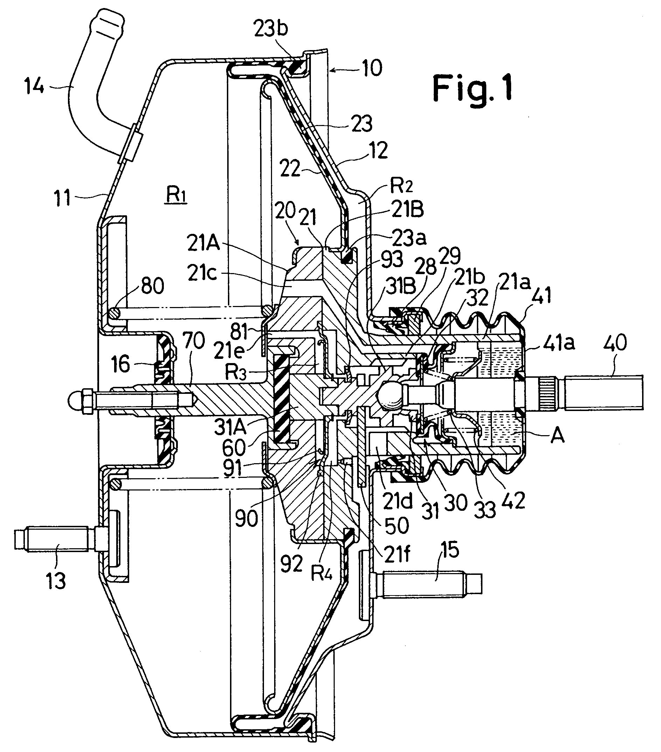

Referring now to Fig.1 in which a booster of a single negative-pressure type is shown, a housing 10 of the booster includes a cup-shaped front shell 11 which is to be connected to a master cylinder (not shown) by a bolt 13 and a plate shaped rear shell 12 which is to be connected to a dash-boad (not shown) by a bolt 15. The front shell 11 has also a connector 14 which is in fluid connection with an intake manifold (not shown). Within the housing 10, there are defined a constant-pressure chamber R1 and a variable-pressure chamber R2 by a power piston 20.

The power piston 20 has a hub 21 made of synthetic resin, an annular plate 22 and a diaphragm 23. The hub 21, which accomodates therein a valve means 30, has a cylindrical portion 21a extending outward of the housing 10 through a sealing member 28 and the bush 29. The plate 22 and an inner peripheral portion 23a in the bead configuration of the diaphragm 23 are fluid-tightly fitted within a stepped portion of the hub 21. An outer peripheral portion 23b of the diaphragm 23 which is located at a rear side of the plate 22 is fluid-tightly held between a stepped portion of the rear shell 12 and a rear end portion of the front shell 11.

The valve means 30, which is designed to establish a fluid communication between the variable-pressure chamber R2 and either the constant-pressure chamber R1 or the atmosphere, includes a valve-plunger 31, a cylindrical valve 32 and other members.

The valve plunger 31 is assembled or mounted on a front end portion of a push rod 40 or an input rod which is movable in the axial direction together with a depressing or releasing movement of a brake pedal (not shown) and is slidably fitted in the axial direction within the hub 21. For preventing the separation of the valve plunger 40 from the hub 21, a key 50 is employed. The cylindrical valve 32 is assembled within a cylinder portion 21a of the hub 21 and is continually urged in the frontward direction by a spring 33, so that the cylindrical valve 32 is engagable with either a rear end portion of the valve plunger 31 or an inner stepped portion 21b of the valve plunger 31.

The valve means 30 is operated as follows: While the brake pedal is being depressed, the cylindrical valve 32 is in engagement with the rear end of the valve plunger 31 and is out of engagement with the inner stepped portion 21b thereof, whereby fluid communication between the constant-pressure chamber R1 and the variable-pressure chamber R2 is established through a hole 21c of the hub 21, the cylinder portion 21a and a hole 21d. On the other hand, while the brake pedal is being released, the cylindrical valve 32 is out of engagement with the rear end of the valve plunger 31 and is in engagement with the inner stepped portion 21b thereof, the variable-pressure chamber R2 is in fluid communication with atmosphere or outside air through the hole 21d, the cylinder portion 21a, the inner hole of the cylinder valve 32, air-filter A and an apperture 41a of a boost 41 which is provided between the housing 10 and the push rod 40.

In this embodiment, the key 50 which is in its illustrated position in Fig.1 is in abutment with the rear shell 12 for regulating the positions of the hub 21 and the hub plunger 31, whereby the cylinder valve 32 is in engagement with the rear end portion of the valve plunger 31 and the inner stepped portion 21b. It is noted that practically the existence of a slight clearance between the inner stepped portion 21b and the cylinder valve 32 is allowable or permitted. Thus, upon frontward movement of the push rod 40 against the spring 42, immediate fluid communication is established between the variable-pressure chamber R2 and the atmosphere.

At a front end portion of the power piston 20, there is (assembled) provided an operating rod 70 or an output rod which is in engagement with a piston (not shown) of the master cylinder after passing a sealing member 16. Within a recess of the operating rod 70 which is formed at a rear end portion thereof, a rubber disk 60 is accomodated. A spring 80 continually urges the power piston 20 in the rearward direction via a retainer 81 and the biasing force also serves to hold the operating rod 70 fixedly between the retainer 81 and the power piston 20.

In this embodiment, the hub 21 is divided into two members- a front hub 21A and a rear hub 21B both of which are fixed together by a plate 22, and the valve plunger 31 is comprised of two members- a front plunger 31 A and a rear plunger 31B in such a manner that one is movable relatively to the other. Between the hub 21 and the front plunger 31A, there is provided a wall 90.

The wall 90 includes a plate 91 and a diaphragm 92. At a front side of the wall 90, there is defined an auxiliary pressure chamber R3 to which the pressure in the constant-pressure chamber R1 is continually supplied through an aperture 21a, and at a rear side of the wall 90, there is defined an auxiliary pressure chamber R4 which is in fluid communication with the variable-pressure chamber R2 through an orifice passage 21f. The plate 91 and the inner peripheral portion are held within the stepped portion of the front plunger 31A. The diaphragm 92, which is at a rear side of the plate 91, is fluid-tightly held at its outer peripheral portion between the front hub 21A and the rear hub 21B.

In this embodiment, a check-valve 93 is provided at an outer periphery of the rear plunger 31B for quick discharge of the pressure from the pressure chamber R4 to the chamber R2 upon brake-releasement.

In operation, the brake-pedal is depressed by the driver, an operating force or an input force is applied to the push-rod 40 in the frontward direction which corresponds to the left direction in Fig.1. Then, due to the actuation of the valve mechanism 30 which is well-known, the pressure in the variable-presssure chamber R2 is increased which results in the frontward movement of the push rod 40. Simultaneously, the resulting pressure-increasement is transmitted or applied to the pressure chamber R4 after a time-lag or a delay of the time which depends upon the rating of the orifice passage 21f, thereby moving the inner peripheral portion of the wall 90 towards the constant-pressure chamber R1 with respect to the outer peripheral portion of the wall 90.

Thus, at the initial stage of the braking operation as shown in Fig.2, an output load F3 which is transmitted to the operation rod 70 is increased in proportion to an input load F1 which is the force applied to the push rod 40. Within the later stage of the braking operation which is after a time T1, the front plunger 31A is pushed in the frontward direction in accordance with the pressure-increasement in the pressure chamber R4, and the rear plunger and the push rod 40 are moved in the frontward direction thereby actuating the valve mechanism 30. Due to the resulting valve mechanism 30, the power piston 20 performs its outputting movement with the result that the output load F3 is increased relative to the pressure-increasement of the input load F1. Such operation is continued until the pressure in the pressure chamber R4 becomes equal to the pressure in the variable-pressure chamber R2 at the time T2 shown in Fig. 2, and after the resulting equalization in pressure the forces applied to the wall 9 are balanced whereby the frontward movement of the front plunger 31A and the increasement of the output load F3 are stopped.

Consequently, within the later stage in the braking operation, the pressure-increasement of the output load F3 can be obtained without increasing the input load F1. Thereby driver's feeling to the reliability and operation of the braking is increased.

In addition, the foregoing booster can be combined to a brake-pad means which is designed to be small and large in its frictional coefficient in the initial and the later stages in the braking operation respectively, which results in the ideal braking operation without squealing and with sufficient braking force.

Due to the fact that the booster per se is similar to the conventional one (the first one described above), in which during operation the braking force is released, except for the check valve 93 which serves to drain the pressure in the pressure chamber R4 towards the variable-pressure chamber R2, further details are omitted.

Referring to Fig. 3, a major portion of another embodiment according to the present invention is disclosed. In this embodiment, a wall 90 is disposed between an operation rod 70 and a hub 21. The wall 90 includes a plate 91 and a diaphragm 92. The wall 90 is at its front end portion exposed directly to a constant-pressure chamber R1 and at a rear side of the wall 90 there is defined a pressure chamber R4 which is in fluid communication with a variable-pressure chamber R2 through an orifice passage 21f in a hub 21. An inner periphery of the plate 91 and an inner periphery of the diaphragm are fluid-tightly mounted in a recess of the operating rod 70. An outer periphery of the diaphragm 92 which is at a rear side of the plate 91 is fluid-tightly held between the hub 21 and a retainer 81. The remaining structure of this embodiment is not further described since it is similar or identical to that of the foregoing embodiment.

In this embodiment, the supply of the atmospheric pressure to the pressure chamber R4 causes the axial movement of the outer periphery of the wall 90 relative to its inner periphery towards the constant-pressure chamber R1, thereby moving the operating rod 70, the plunger 31 and the push rod 40 in the frontward direction. Thus, due to the actuation of a valve means 30, the power piston 20 is moved to its ouput side or towards the master cylinder in such a manner that the degree of increase in the output load F3 is larger than that of the input load F1. The remaining operation of this embodiment is not further described since it is similar or identical to that of the foregoing embodiment.

The booster includes 1 a housing in which a constant-pressure chamber and a variable-pressure chamber are defined by a power piston, 2 an input rod to which an input force is applied and which is operatively connected to one end of the power piston, 3 a valve means provided in the power piston, which is operatively connected to the input piston and opened upon receipt of the input force therefrom in such a manner that the differential presssure between the chambers moves the power piston, 4 an output rod operatively connected to the other end of the poker piston, 5 a wall across which a first auxiliary chamber at a side of the variable-pressure chamber and a second auxiliary chamber formed at a side of the constant-pressure chamber are formed, and 6 an orifice passage for connecting the variable-pressure chamber and the first auxiliary chamber.

## Claims

1. A booster comprising:
a housing (10) in which a constant-pressure chamber (R1) and a variable-pressure chamber (R2) are defined by a power piston (20);
an input rod (40) to which an input force is applied and which is operatively connected to one end of said power piston;
a valve means (30) provided in said power piston (20), wherein said valve means is operatively connected to said input rod (40) and opened upon receipt of the input force therefrom in such a manner that the differential pressure between the chambers moves said power piston;
an output rod (70) operatively connected to the other end of said power piston (20);
a wall (90) with a front side exposed to said constant-pressure chamber (R1) and a rear side defining an auxiliary chamber (R4), **characterized in that**
said auxiliary chamber (R4) is communicated with said variable-pressure chamber (R2) through an orifice passage (21f).

2. A booster according to claim 1, **characterized in that** an outer periphery and an inner periphery of said wall (90) are fluid-tightly connected to said power piston (20) and to a valve plunger (31) of said valve means (30), respectively.

3. A booster according to claim 1, **characterized in that** an outer periphery and an inner periphery of said wall (90) are fluid-tightly connected to said power piston (20) and to said output rod (70), respectively.

4. A booster according to claim 1, further comprising a check-valve (93) which serves to drain the pressure in said auxiliary chamber (R4) to said variable-pressure chamber (R2) upon release of the input force.

## Patentansprüche

1. Verstärker mit:
einem Gehäuse (10), in dem mittels eines Arbeitskolbens (20) eine Kammer (R1) mit konstantem Druck und eine Kammer (R2) mit variablem Druck festgelegt sind;
einem Eingangsstab (40), der einer Eingangskraft ausgesetzt wird and der mit einem Ende des Arbeitskolbens wirkverbunden ist;
einer in dem Arbeitskolben (20) vorgesehenen Ventileinrichtung (30), wobei die Ventileinrichtung mit dem Eingangsstab (40) wirkverbunden ist und sich, nachdem sie die von ihm ausgehende Eingangskraft erhalten hat, derart öffnet, daß der zwischen den Kammern bestehende Differenzdruck den Arbeitskolben bewegt;
einem Ausgangsstab (70), der mit dem anderen Ende des Arbeitskolbens (20) wirkverbunden ist;
einer Wand (90) mit einer Vorderseite, die der Kammer (R1) mit konstantem Druck ausgesetzt ist, und mit einer Rückseite, die eine Hilfskammer (R4) festlegt, dadurch gekennzeichnet, daß die Hilfskammer (R4) mit der Kammer (R2) mit variablem Druck über eine Öffnungsleitung (21f) verbunden ist.

2. Verstärker nach Anspruch 1, dadurch gekennzeichnet, daß ein äußerer Umfang und ein innerer Umfang der Wand (90) jeweils mit dem Arbeitskolben (20) und einem Ventilkolben (31) der Ventileinrichtung (30) fluiddicht verbunden sind.

3. Verstärker nach Anspruch 1, dadurch gekennzeichnet, daß ein äußerer Umfang und ein innerer Umfang der Wand (90) jeweils mit dem Arbeitskolben (20) und dem Ausgangsstab (70) fluiddicht verbunden sind.

4. Verstärker nach Anspruch 1, mit weiterhin:
einem Rückschlagventil (93), das dazu dient, den in der Hilfskammer (R4) herrschenden Druck in die Kammer (R2) mit variablem Druck nach dem Lösen der Eingangskraft abzulassen.

## Revendications

1. Amplificateur de force comprenant :
un carter (10) dans lequel une chambre à pression constante (R1) et une chambre à pression variable (R2) sont définies par un piston de puissance (20);
une tige d'entrée (40) à laquelle une force d'entrée est appliquée et qui est reliée fonctionnellement à une extrémité dudit piston de puissance;
un moyen de soupape (30) prévu dans ledit piston de puissance (20), où ledit moyen de soupape est relié fonctionnellement à ladite tige d'entrée (40) et ouvert lors de la réception de la force d'entrée en provenant d'une manière telle que la pression différentielle entre les chambres provoque le déplacement dudit piston de puissance;
une tige de sortie (70) reliée fonctionnellement à l'autre extrémité dudit piston de puissance (20);
une paroi (90) avec un côté avant exposé à ladite chambre à pression constante (R1) et un côté arrière définissant une chambre auxiliaire (R4), **caractérisé en ce que**
ladite chambre auxiliaire (R4) communique avec ladite chambre à pression variable (R2) par l'intermédiaire d'un passage à orifice (21f).

2. Amplificateur de force selon la revendication 1, caractérisé en ce qu'une périphérie extérieure et une périphérie intérieure de ladite paroi (90) sont reliées d'une manière étanche aux fluides audit piston de puissance (20) et à un plongeur de soupape (31) dudit moyen de soupape (30), respectivement.

3. Amplificateur de puissance selon la revendication 1, caractérisé en ce qu'une périphérie extérieure et une périphérie intérieure de ladite paroi (90) sont connectées d'une manière étanche aux fluides audit piston de puissance (20) et à ladite tige de sortie (70), respectivement.

4. Amplificateur de puissance selon la revendication 1, comprenant en outre une soupape de retenue (93) qui sert à évacuer la pression régnant dans ladite chambre auxiliaire (R4) dans ladite chambre à pression variable (R2) lors de l'élimination de la force d'entrée.
